# EUROPÄISCHE PATENTANMELDUNG

(11) **EP 1 598 376 A1**
(43) Veröffentlichungstag der Anmeldung: **23.11.2005**
(21) Anmeldenummer: 05450053.3
(22) Anmeldetag: 17.03.2005
(51) Int. Cl.: C08F 8/28

(54) **Verfahren zur Herstellung von Verpackungsmaterialsystemen für die technische und pharmazeutische Einzeldosierung**

(30) Priorität: 16.04.2004 AT 6622004
(71) Anmelder: Constantia Packaging AG, 1010 Wien (AT)
(72) Erfinder: Haschke, Heinz, Dr., 2542 Kottingbrunn (AT)
(74) Vertreter: Dungler, Karin

(57) **Zusammenfassung**

Die Erfindung betrifft ein Verfahren zur Herstellung von Verpackungsmaterialsystemen für technische und pharmazeutische Einzeldosierungen unter Verwendung von durch Säure katalysierte Actalisierungsreaktion von Polyvinylalkohol mit Stärke oder Stärkederivaten hergestellten Vinylalkoholcopolymeren (PVACL) in Verbindung mit Destrukturierungsmitteln. Dieses erfindungsgemäße Verfahren ist dadurch gekennzeichnet, dass kaltwasserlösliche, wasserhältige Vinylalkoholcopolymeren (PVCL) bevor oder nachdem aus diesen Folien hergestellt werden mit Destrukturierungsmitteln versetzt werden, sodass die Wasserstoffbrücken zwischen den Polymerketten ganz oder zumindest teilweise aufgebrochen werden und das anschließend die so verbreiteten Folien aus Vinylalkoholcopolymeren auf Temperaturen unterhalb ihrer Schmelz- bzw. Erweichungsintervalle erwärmt und in einem Siegelprozess unter Anwendung von Druck für die Erzeugung einer Siegelnaht zu Verpackungen in Form von Einzeldosierungen weiterverarbeitet werden.

## Beschreibung

Die Erfindung betrifft ein Verfahren zur Herstellung von Umhüllungs-und Verpackungsmaterialsystemen, sowie für die Hülle von Verpackungen, insbesondere für die Umhüllung dosierter Darreichungsformen für die technische und pharmazeutische Applikation wie sie sog. Kapseln, insbesondere Weichkapseln darstellen. Das erfindungsgemäße Umhüllungs- bzw. Verpackungsmaterialsystem betrifft Hüllmaterialien aus (1) durch Säure katalysierte Acetalisierungsreaktion von Polyvinylalkohol mit Stärke oder Stärkederivaten hergestellte Vinylalkoholcopolymere (PVACL) in Verbindung mit (2) Destrukturierungsmitteln, sowie ein Herstellungsverfahren, welches die Formung derartiger Materialsysteme und die dichte und direkte Umschließung des zu applizierenden Füllgutes damit umfasst.

### Stand der Technik

Es ist bekannt, flüssiges Füll- bzw. Verpackungsgut, wie Lösungen, Emulsionen, Suspensionen, Pasten oder festes Füll- bzw. Packungsgut wie Pulver, Granulat, Formkörper wie Pellets, Tabletten, Kugeln usw. - auch kurz "Füllgut" oder "Packungsgut" genannt - so zu verpacken, dass jede Verpackungseinheit einer genau dosierten Packungsgut-Dosis entspricht. Es ist meist unerheblich, ob es sich dabei um eine Packung oder eine Darreichungsform handelt.

Definitionsgemäß sind "Verpackungen" Umschließungen oder "Umhüllungen", die den Schutz und/oder die Identifikation des Packgutes sicherstellen, die aber beim bzw. vor dem Gebrauch des Füllgutes von diesem getrennt und getrennt verwertet, oder vernichtet werden, siehe beispielsweise Beutel für Bonbons).

Die Umhüllungen von "Darreichungsformen" hingegen werden beim unmittelbaren Gebrauch zusammen mit dem Füllgut verwertet bzw. appliziert und haben so ein "gemeinsames" Schicksal, siehe beispielsweise Medikamentenkapsel. Die Umhüllung einer solchen - im besonderen Fall dosierten - Darreichungsform ist somit definitionsgemäß keine Verpackung und muss daher anders als diese, und zwar auch in der Regel von einer Verpackung verschiedene, funktionelle Eigenschaften haben.

Zum Beispiel stellt die Umhüllung einer Darreichungsform ein zufriedenstellendes Handhaben sicher, wogegen die weitere Verpackung den Schutz vor Umwelteinflüssen sicherstellt.

Sind sowohl Verpackungen als auch Darreichungsformen gemeint, so sollen diese unter dem Sammelbegriff "Packungen" zusammengefasst werden.

Beispielsweise ist es vorteilhaft, flüssige Körperpflege- und Reinigungsmittel, aber auch pulverförmige Farbstoffe, pastöse Badegele oder Kosmetik-Artikel, Body-Lotions, Duftstoffe, Medikamente oder deren Zubereitungen ebenso wie Genussmittel, Agrarchemikalien oder Düngemittel, welche allesamt auch als Suspensionen fester Inhaltsstoffe in flüssigen oder pastösen Suspensionsmitteln vorliegen können, in Einzeldosen abzupacken, sodass diese bei ihrer Anwendung nicht jeweils abgewogen oder sonst wie abgemessen werden müssen, sondern für den jeweiligen Anwendungszweck gleich richtig dosiert vorliegen und als solche insgesamt dem Verbrauch zugeführt werden. Als zusätzliche Packmaterialien können weiters Behältnisse bekannter Art aus mehrheitlich inertem Material, wie Beutel, Dosen, Kartonagen, Kunststoff- und Glasflaschen u.a.m. in Frage.

Als solche Verpackungen oder Darreichungsformen - dosiert oder nicht dosiert - kommen Beutel, Kissen (Pouches) oder Kapseln in Frage, wobei deren Form und Ausprägung abhängig von den dafür verwendeten Herstellprozessen sind.

Bekannt sind zum Beispiel Siegelrandbeutel oder Schlauchbeutel, bzw. Hart- oder Weichkapseln.

Es ist weiters bekannt, als Hüllenmaterial für derartige einzeln dosierte Packungen Materialien zu verwenden, welche bei der jeweiligen Anwendung das Packungsgut freigeben, bzw. gezielt freigeben; - indem sie sich beispielsweise im dem Medium, in welchem sie angewendet werden, auflösen.

So lassen sich für Darreichungsformen Hüllenmaterialien verwenden, die in bestimmten organischen Lösungsmitteln deren Inhalt freigeben, oder für Packungen aller Art wie auch - für den bisher weit überwiegenden Teil der Anwendungen - solche, die den Inhalt in wässrigen Systemen freigeben. Dafür kommen beispielsweise Kapseln aus Gelatine, Stärke oder andern Biopolymeren in Frage. Für Arzneimittel oder Paintballs sind solche Produkte seit langem markterprobt. Allerdings haben diese Hüllmaterialien den Nachteil, dass sie sich nur in warmem oder heißem Wasser lösen.

Es sind ferner auch andere organische Polymere bekannt, welche sich sogar in kaltem Wasser lösen und sich als Verpackungsmaterialien oder Hüllenmaterialien nutzen lassen. Bekannt sind zum Beispiel allseitig versiegelte, Flüssigkeit enthaltende Siegelrandbeutel aus teilverseiftem Polyvinylacetat (PVA/PVAc), kurz auch als Polyvinylalkohol (PVA) bezeichnet.

Diese Polymeren bzw. deren mit Verarbeitungshilfsmitteln wie Weichmachern, wie Glycerin, Propylenglycol, Wasser etc., gemischten Zubereitungen haben dafür wieder andere Nachteile, wie relativ hohe Schmelzpunkte. So werden in der WO-A-92/17382 Schmelzpunkte bzw. - bereiche um 160° bzw. um 200°C angegeben.

Weiters haben PVA-Materialien wegen der zu ihrem Auf- bzw. Anschmelzen anzuwendenden hohen Temperaturen in Verbindung mit ihren chemischen Eigenschaften (d.i.u.a.: leichte Dehydratisierbarkeit) die Tendenz, dass sie sehr schnell zur Pyrolyse neigen, sowie infolge ihres Wassergehaltes bei höheren Temperaturen durch Herauskochen des Wassers aufschäumen und daher schwer zu verschweißen sind. Aufgrund dieser Effekte in Verbindung mit noch weiteren nachteiligen Eigenschaften derartiger herkömmlicher Materialien wird gemäss der WO-A-92/17382 beschrieben, dass beim Verschweißen die Bildung von "pinholes", also Fehlern in Form von Durchschlagstellen auftreten.

Für die Verwendung derartiger Hüllen- und Verpackungsmaterialien zur Herstellung von Behältnissen, Umschließungen und Containern, müssen die Verpackungsfilme aber auf jeden Fall, selbst wenn sie durch Schlauchextrusion hergestellt, oder gegebenenfalls einem Tiefziehvorgang zur Ausbildung von Mulden unterworfen werden, zumindest an zwei Siegelnähten, welche das Packungsgut dicht umschließen, zu geschlossenen Behältern verschlossen werden.

Im günstigeren Fall geschieht dieses Verschließen zu stabilen Verpackungsgut-Einheiten wie Beuteln oder Kapseln durch echtes Verschweißen in einem sogenannten Heißsiegelprozess unter Ausbildung einer echten Kohäsionsverbindung. In diesem Zusammenhang ist auf die Definition von Kohäsion nach S. Glasstone, Textbook of physical Chemistry, MacMillan & Co Ltd. London Seite 483 zu verweisen, wonach dies der Zusammenhalt zweier gleichartiger Phasen ist.

Im Gegensatz dazu ist unter dem Begriff "Adhäsion" lediglich das Anhaften eines Stoffes an einem anderen Stoff zu verstehen.

Unter Heißsiegeln zum Erzeugen von sogenannten Heißsiegelnähten ist streng genommen ein Prozess zu verstehen, bei dem bestimmte Zonen zweier oder mehrerer thermoplastischer Filme fest miteinander verbunden werden, indem die Filme in Kontakt miteinander, bis auf ihre Schmelztemperaturen aufgeheizt werden und dadurch ein Verschweißungsvorgang ermöglicht wird, siehe dazu die Lehre gemäß US-A-4,154,636.

Ein typisches Beispiel dafür ist das Heißsiegeln von Joghurtdeckeln auf Joghurtbecher, bei welchem Prozess die mit einem thermoplastischen Heißsiegellack beschichteten Deckel mittels ringförmiger Heizbacken auf die Becherränder gepresst und dabei so hoch erhitzt werden, dass der Heißsiegellack mit dem Becherrand verschmilzt.

Daher müssen die zu verbindenden Polymerphasen (Filme) jedenfalls - wie auch für Heißsiegel-Prozesse in der Literatur beschrieben (http://plastics.about.com/library/glossary/h/bldef-h2585.htm) - a) in Kontakt miteinander und b) zumindest auf ihre Schmelzetemperatur erwärmt werden.

Oft wird aber der Begriff "heat-seal, also Heißsiegeln" für jede Art von Verbindung zweier Folien unter Wärmeeinwirkung verwendet - siehe die Lehre gemäss WO A1 03/008180 in Verbindung mit der Lehre aus der WO A 97/35537 - auch wenn es sich dabei gar nicht um eine echte Verschweißung, also um eine Kohäsionsverbindung handelt, sondern lediglich um eine Verklebung, d.h. um eine Adhäsionsverbindung.

Im Gegensatz dazu soll bei der Beschreibung der vorliegenden Erfindung jedoch ausschließlich der rein wissenschaftliche Begriff "heat seal" bzw. "Heißsiegelung bzw. Heißsiegeln" verwendet werden.

Natürlich fallen unter den exakten Begriff der Heißsiegelung aber sehr wohl auch die bekannten Verfahren, bei denen das Verbinden von zwei Polymerphasen unter Wärmeeinwirkung bei Temperaturen oberhalb der Schmelzpunkte der in Kontakt miteinander befindlichen Phasen durch sogenannte Siegellacke, welche als Lackierung, durch Extrusionsbeschichtung oder Coextrusion auf die zu verbindenden Filme aufgetragen wurden, bewerkstelligt wird. Dabei erfolgt die Heißsiegelung durch eine dünne zusätzliche Schicht zwischen den beiden zu verbindenden Filmen, welche in Verbindung mit der angewendeten Temperatur selbst anschmilzt und auch die beiden zu verbindenden Filme zum Anschmelzen bringt. Dabei handelt es sich genau genommen um eine doppelte Verschweißung, nämlich der Folie A mit der Zwischenschicht Z und dann wieder des so gebildeten Verbundes mit seiner Z-Seite zur zweiten Folie A. Es handelt sich somit nicht - um eine Adhäsionsverbindung. In diese Kategorie fallen zum Beispiel auch HDPE-Folien, welche mit einer LDPE-Schicht coextrudiert sind. Typisch für das Verschweißen ist daher das Erwärmen auf Temperaturen bis in den Bereich der Schmelze an den zu verbindenden Kontaktflächen, wodurch es zu einem Ineinanderfließen der beiden zu verbindenden Phasen - auch wenn diese anfangs unterschiedlich sind im o.g. Beispiel HDPE und LDPE - und zu deren Vermischung kommt. Es wird also wieder eine Kohäsionsverbindung und keine Adhäsionsverbindung erzeugt.

Alternativ zur bisher beschriebenen echten Verschweißung kommt für das Verschließen von Packungsgut-Einheiten zu Beuteln oder Kapseln der weniger günstige Prozess der Verklebung in Frage. Weniger günstig deshalb, weil man beim Verkleben zwar bei Temperaturen unterhalb der Schmelztemperatur arbeiten kann, allerdings dabei sehr oft sogenannte "weak seals", d.h. Verbindungen mit schwacher Siegelnahtfestigkeit erhält, siehe WO A1 03/008180, Seite 1 Zeile 26. Diese "weak seals" sind zuerst scheinbar fest, jedoch nach einigen Stunden oder Tagen - insbesondere unter Einwirkung des Füllgutes - gehen diese wieder auf, was zu Leckagen oder "Schwitzen" der Packung bis hin zum Auslaufen des Füllgutes führt. Bei Verwendung von wasserlöslichen, Wasserhältigen Verpackungsmaterialien wie PVA kommt dazu noch das Problem, dass man zur Herstellung von Packungsverschlüssen geradezu auf die Verklebung angewiesen ist, siehe dazu die Lehre gemäss WO A1 97/35537 oder WO A1 03/008180 A1. Dies deshalb, da der Alternativweg der Verschweißung, welche die Anwendung von Temperaturen deutlich über dem Siedepunkt von Wasser erforderlich macht, wieder dazu führt, dass an den Siegelnähten ein "Kochen" des dort anwesenden Wassers unvermeidlich ist, sodass sich dadurch Blasen bzw. Leckage-Kanäle durch die Siegelnähte bilden.

Weniger günstig ist der Packungsverschluss durch Verklebung im Vergleich zu jenem durch Verschweißung auch deshalb, weil verklebte Siegelnähte in der Regel nicht so stabil sind wie verschweißte. Dies deshalb, da durch die Zwischenschaltung einer Klebeschicht eine Adhäsionsverbindung entsteht, welche auch empfindlicher gegenüber den Angriff durch das Packungsgut ist.

Diese Eigenschaften derartiger Verbindungen ergeben sich auch aus der allgemeinen Definition einer "Verklebung": Dabei werden die beiden zu verbindenden Polymerphasen ("Filme") durch eine unmittelbar zwischen den beiden Phasen liegende, weitere Phase, das ist die "Klebephase", welche für den Adhäsionseffekt verantwortlich ist, mit anderen chemisch-physikalischen Eigenschaften verbunden. Diese anderen chemisch-physikalischen Eigenschaften beziehen sich vor allem auf die chemische Zusammensetzung, das ist die Natur und Zusammensetzung des Polymers oder die Natur und Konzentration des Weichmacher- oder Lösungsmittel-Anteils im Zeitpunkt der Verklebung, und auf die daraus resultierende Mischbarkeit mit den anderen Polymerphasen, auf die Viskosität bei definierter Temperatur, sowie auf den Schmelz- bzw. Erweichungsbereich. Dabei ist es unerheblich, dass sich die Eigenschaften oder die Zusammensetzung der Klebemittelphase im Laufe der Zeit, der Temperaturveränderungen usw. erneut verändern kann. Die für den Verklebevorgang notwendigen Drücke entsprechen im wesentlich nur den für das Fliessen der Klebephase notwendigen, oder für die Verhinderung der Trennung der beiden zu verbindenden Phasen zum Zeitpunkt des Klebevorganges notwendigen Drücke.

Beim Siegelprozess des Packungsgutes entstehen außerdem auch generelle Probleme, welche von den gewählten Verfahrensparametern und vom gewählten Verpackungsmaterial, aber auch vom Packungsgut selbst abhängen:

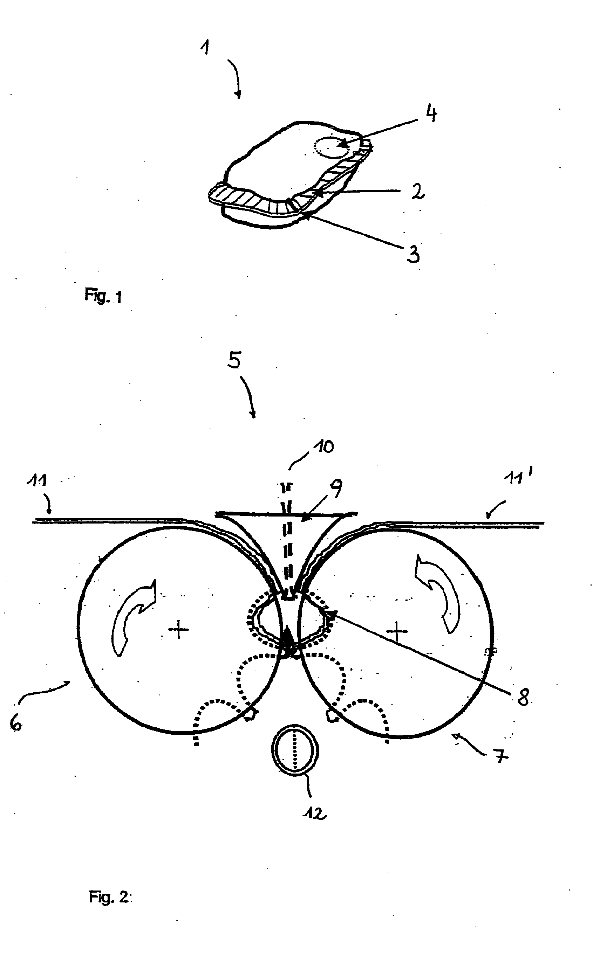

Als Einsiegelungsprozess kann im einfacheren Fall ein Flachsiegelungsprozess gewählt werden, bei dem, um eine sichere und dichte Abpackung des Packungsgutes zu erreichen, eine um die eigentlich Kissen-förmige Verpackung (in der englischen Fachliteratur als "Pouch" bezeichnet) umlaufende, relativ breite, in der Regel ca. 3-5mm, sich außerhalb der "Kapsel" und damit entfernt vom Kontaktbereich mit dem Füllgut befindliche, Boden- und Deckelfolie miteinander verbindende ("extrakapsuläre") Siegelnaht - sogenannter "Saturnring" - als Verschlussnaht - siehe Fig. 1 - hergestellt wird. Für derartige breite Siegelnähte reichen oft auch Verklebungsvorgänge, wenn die Packungen keiner hohen mechanischen Beanspruchung ausgesetzt sind oder die Siegelnahtfestigkeit nicht von allzu langer Haltbarkeit sein muss.

Derartige Siegelnähte sind aber nicht nur unschön und neigen dazu scharfkantig zu sein, sie behindern auch das freie Gleiten und damit die Schüttbarkeit solcher Packungen. Insbesondere erlaubt die Trennung in örtlicher und zeitlicher Abfolge der Prozessschritte, welche notwendig sind für die Herstellung einer verschlossenen Verpackung oder umhüllten Darreichungsform und zwar in: a) Formung (einer Darreichungsform oder Verpackung), über: b) Befüllung, zu: c) Versiegelung und d) Vereinzelung (Stanzen, Ausschneiden) eher die Verwendung von Verklebungen.

Darüber hinaus kommt es beim Verpacken von flüssigem Packungsgut, wie Tenside enthaltende Flüssigwaschmittel immer wieder vor, dass die Verpackungsfolienzonen, welche für das Siegeln benötigt werden, mit Teilen des Packungsgutes benetzt werden, sodass dann die darin enthaltenen Tenside als Trennmittel wirken und die Siegelnaht an diesen Stellen undicht ist.

Es wurde daher gemäss der WO A1 03/008180 vorgeschlagen, die zu versiegelnden Kontaktflächen vor dem Versiegeln mit einem Lösungsmittel bzw. bei Verwendung wasserlöslicher Verpackungsmaterialien mit Wasser als Lösungsmittel abzuwaschen. Diese Verfahrensvariante bewirkt ein Freispülen der zu versiegelnden Kontaktflächen von eventuellen Verunreinigungen durch Trennmittel bzw. - da jeder Trennmitteleffekt ein Oberflächeneffekt ist - durch das Anlösen des Verpackungsmaterials und die dadurch bewirkte Verdünnung des Trennmittelfilms bzw. Möglichkeit seines Wegdiffundierens ("Absacken") in das Innere des Verpackungsmaterials, wodurch dieser an der Kontaktoberfläche beseitigt wird. Es ist bekannt, dass auf diese Weise die Wirkung von oberflächenaktiven Substanzen eliminiert werden kann, so wie Ölfilme entschärft werden, wenn diese ins Innere von Kieselqur oder porösen Streumitteln aufgenommen werden. Ebenso und in Analogie dazu ist bekannt, dass durch eine solche Maßnahme die erreichte Siegelverbindung fester ist, als ohne die Benetzung des Verpackungsmaterials durch ein Lösungsmittel, siehe WO-A1 03/008180. Dies gilt sowohl für nichtwässrige Lösungsmittel als auch für Wasser als Lösungsmittel.

Werden die potentiellen Siegelflächen länger dem Angriff eines Lösungsmittels ausgesetzt, so kann dies schließlich nach einiger Zeit auch zu einem Anlösen des Verpackungsfilms führen, wodurch an dessen Oberfläche eine klebrige Schicht ausgebildet wird. Diese würde den Heißsiegelvorgang durch eine zusätzliche Verklebung an der Oberfläche der Siegelflächen natürlich unterstützen. Da eine derartige Anlösung einer Folie durch ein Lösungsmittel aber ein Diffusions-kontrollierter Prozess ist und damit ein Prozess, bei dem die Eindringtiefe des Lösungsmittels in die Folie Zeit-abhängig ist, wird nach diesem Anlöse-Verfahren immer nur ein geringer Prozentsatz der Foliendicke in einen klebrigen Zustand versetzt, wogegen der überwiegende Rest der tiefer (das heißt der zum Lösungsmittelauftrag abgewandten Seite) liegende Folienanteil unverändert bleibt. Daher spricht man gemäß der WO-A-97/35537 (EP-0889710) bei derartiger Prozessführung von einer partiellen Solvation (partial solvation; US-A-2002026771). Mit der Lehre aus WO 03/008180 A1 hat die nach solchen Anlöse-Verfahren erzeugte Siegelung bzw. die "Verstärkung einer Heißsiegelung" aber hinsichtlich des Typs der erzeugten Siegelnaht nur den Charakter einer Kombination aus Heißsiegelung und Verklebung gemeinsam und besitzt daher den Charakter der vorgenannten "weak-seals", insbesondere wenn bei Temperaturen unterhalb der Schmelztemperatur des Verpackungsmaterials gearbeitet wird.

Eine ähnliche Verfahrensweise, aber mit einem "umgekehrten" Effekt wurde bereits in der WO-A1-0166082 vorgeschlagen, wobei Verpackungsmaterialien aus Polyvinylalkohol oder aus Acetalen des Polyvinylalkohols zum Schutz gegen einen Angriff von Lösungsmitteln oder das Verpackungsmaterial anlösendem Packungsgut vor dem Befüllen mit dem Packungsgut mit einer Schutzschicht ausgerüstet wird. Dies erfolgt durch Eintauchen in oder Besprühen mit "Zusammensetzungen", welche aus PVA oder dessen Derivaten in Lösungsmitteln wie Wasser, Dimethylformamid, Dimethylsulfoxid, N-Methyl-2-Pyrrolidon, Glycerin, Polyethylenglycolfettsäureester etc. bestehen. Dadurch soll eine Schutzausrüstung, welche sich für das sogenannte Rotary-Dies-(Rotations-Tiefzieh- und Siegel-)Verfahren gemäss Fig.2 eignet, erzeugt werden.

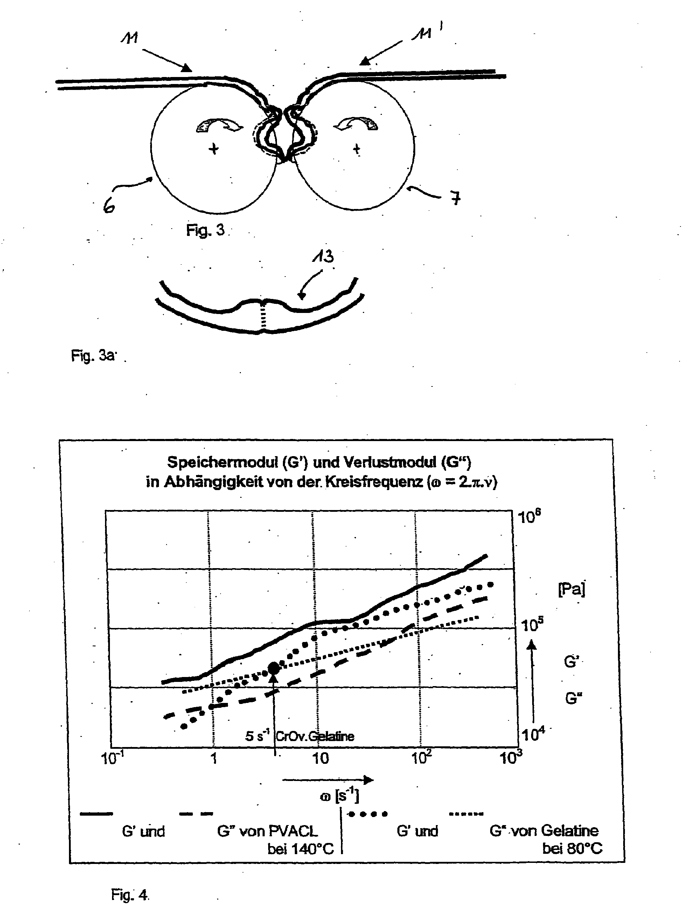

Ein - im Vergleich zu üblichen Siegelprozessen - wesentlich effektiverer und damit höhere Produktionsraten zulassender und somit wirtschaftlicherer und hinsichtlich der Anwendbarkeit der gewonnenen Einzeldosierungs-Packungen günstigerer Einsiegelungsprozess ist beispielsweise in der US-A-2,288,327 beschrieben, wonach anstelle von "Pouches" (Beuteln) stabile und vollständig gefüllte Kapseln ohne umlaufenden, breiten Siegelrand bereitgestellt werden. Allerdings ist dieser sogenannte Rotary-Dies-Prozess noch empfindlicher auf mangelhafte Verschweißung, da er keine breite und extrazelluläre Siegelnaht - siehe Fig. 3 und 3a - ermöglicht und außerdem weil in der Regel nur sehr kurze Einwirkungszeiten mit jedweden Siegelhilfsmitteln - wie beispielsweise den vorstehend genannten Anlösungsmitteln - zwischen Filmzuführung und Siegelung möglich sind.

Bei diesem Verfahren, nach welchem beispielsweise "Paintballs" (Farbkugeln) hergestellt werden, laufen zwei Metallzylinder, die sogenannten Formwalzen, welche Näpfchen enthalten in der Gestalt der Halbschalen der zu erzeugenden Kapseln, gegenläufig zueinander. Jedem der beiden Zylinder wird ein Band, d.h. eine sogenannte "Folie" bzw. die "Gegenfolie" eines thermoplastischen Stoffes zugeführt, wobei die Zylinder an ihren Näpfchengraten jeweils eine Halbschale der zu erzeugenden Kapsel aus den Bändern herausschneiden, während simultan durch eine Pumpe das Füllgut zwischen diese beiden Halbschalen gedrückt und während des Herausschneidens und Abquetschens des Thermoplasten an den Näpfchengraten dort auch eine Siegelung erzeugt wird. Die Siegelzeit liegt bei diesem Prozess im Bereich von Sekundenbruchteilen.

Die Form der nach dem Rotary-Dies-Verfahren hergestellten Kapseln ist daher grundsätzlich verschieden von den durch übliches Versiegeln von Folien erzeugten "pouches" (Beuteln). So haben nach dem Rotary-Dies-Verfahren hergestellte Kapseln keine extrakapsulären Siegelränder, sondern die Siegelung der Folien erfolgt stumpf (siehe Fig. 3a) durch Herausquetschen des thermoplastischen Materials, welches zwischen den Näpfchenstegen der beiden Formwalzen vorliegt.

Mit diesen Verfahrensparametern ist das Rotary-Dies-Verfahren nach dem bekannten Stand der Technik nur eingeschränkt auf bestimmte Thermoplaste anwendbar. Derartige, für das Rotary-Dies-Verfahren geeignete Thermoplaste sind: Gelatine, thermoplastische Stärke oder Carrageenan. Diese sind jedoch Verkapselungsmaterialien, welche nur in warmem oder heißem Wasser löslich sind.

Unter Inkaufnahme besonderer Einschränkungen hinsichtlich Siegelnahtfestigkeit aufgrund der vorgenannten Hochtemperatur-Blasenbildungs- und Niedertemperatur-weak-seal-Problematik können Siegelverfahren unter Ausweichen auf Klebe-Siegelung nach dem Anlöseverfahren unter Ausnutzen der adhäsiven Effekte, die auftreten, wenn passende Filme, d.h. "suitable" im Sinne der EP 0 889 710 B1, wie Alginat, an ihrer Oberfläche partiell angelöst werden, auch auf hochschmelzende, Kaltwasser-lösliche Polymere wie PVA, wie in WO-A1-97/35537 beschrieben, oder unter Kombination des Schutzschicht-Aufbringungsverfahrens mit üblichen Lösungsmitteln (siehe WO-A1-01/66082), angewandt werden. Insoferne handelt es sich dabei nur um eine ältere Form eines Verklebungsverfahren durch Anlösen der Siegelflächen, wie auch in WO 03/008180 A1 dargelegt, welche zu den bekannten "weak-seals", d.h. niedrigeren Siegelnahtfestigkeiten, führen.

Derartige "weak-seals" sind ständige Fehlerquellen, insbesondere in schnell laufenden und weder breite, extrazelluläre Flachsiegelflächen, noch längere Verweilzeiten für das Eindringen von Anlösungsmitteln in größere Folientiefen, erlaubenden maschinellen Verkapselungsverfahren, wie dem Rotary-Dies-Prozess, und damit auch die Ursache für Ausschussware mit instabilen, also schwachen Siegelnähten.

Für die Bildung dauerhaft dichter Kapseln mit stabilen Siegelnähten im Rotary-Dies-Prozess ist naturgemäß das thermoplastische Verhalten beim Befüllen, wie die Bruchdehnung der E-Modul sowie deren Druck- und Temperaturabhängigkeiten, sowie das Siegelverhalten der als Verkapselungsmaterialien eingesetzten Polymere im Temperaturbereich um bzw. üblicherweise über, bzw. nach der vorliegenden Erfindung unter ihrem Erweichungspunkt bzw. Schmelzintervall entscheidend, um einer Siegelung in der Art eines Heißsiegelprozesses mit echter Verschweißung möglichst nahe zu kommen. Nach dem Stand der Technik sind stark vernetzte Polymere, insbesondere kovalent stark vernetzte Polymere wie beispielsweise vernetzte Phenolharze wie Bakelite® überhaupt nicht schweißbar. Ebenso sind Polymere bzw. PolymerMischungen mit Weichmachern mit teilkristalliner Netzstruktur, beispielsweise PE oder nicht-kovalenter Netzstruktur, wie Gelatine, Carrageene nur schweißbar, wenn die dafür notwendigen Viskositäten, bei Temperaturen unterhalb der Zersetzungstemperatur erreicht werden. Wasserlösliche Polymere mit einem hohen Anteil an wasserlöslich machenden OH-Gruppen sind durch Wasserstoffbrücken zwischen den OH-Gruppen, je nach der chemischen Struktur und OH-Gruppen-Dichte des Polymeren, auch mehr oder weniger stark vernetzt (wie PVA). Ob ein echtes Verschweißen möglich ist, kann bei Thermoplasten durch Aufnahme sogenannter Speichermodul-(G')- / Verlustmodul-(G")-Spektren aufgetragen gegen die Kreisfrequenz ω = 2.π .v ; sowie durch Relaxationsenthalpie / Relaxationszeit-Diagramme charakterisiert werden. Für das Rotary-Dies-Verfahren sind Materialien dann geeignet, wenn sie gekennzeichnet sind durch Erfüllen folgender Bedingungen:
a)die Thermoplasten besitzen bei Temperaturen knapp, d.h. 1 bis 15 °C, unterhalb ihres Erweichungspunktes in ihrem Speichermodul(G')-/ Verlustmodul-(G")-Spektrum im Kreisfrequenzbereich (ω) zwischen 0,1 und 1000 s⁻¹ einen sogenannten Cross-Over-Point (Eins-Punkt)- dieser liegt für Gelatine im Temperaturbereich um 80°C bei 5 s⁻¹ (siehe Fig. 4) und
b)die Thermoplasten weisen im Relaxationsenthalpie-/Relaxationszeitdiagramm bei diesen Temperaturen ein Relaxationsenthalpiemaximum auf, welches bei Relaxationszeiten unter 10 s liegt.

Üblicherweise werden die G' /G" -ω-Diagramme immer in der Nähe, aber unterhalb des Erweichungspunktes eines Thermoplasten aufgenommen, d.h. nicht darüber, weil die Relaxations-Messung üblicherweise nicht in einer halbflüssigen Schmelze erfolgen kann. Die Messung sollte auch nicht weit unterhalb des Erweichungspunktes, d.h. im harten, kalten Zustand, durchgeführt werden, damit die Viskositäts--Relaxations-Effekte und die Energie-Verlust-Effekte unter Wechselkraftbeanspruchung festgestellt werden können, was jedoch im harten, kalten Zustand nur schwer möglich ist.

Polyvinylalkohl (PVA), welcher wegen seiner Kaltwasserlöslichkeit ein interessantes Verkapselungsmaterial wäre, hat einen Erweichungspunkt um 220°C, oder wenn Additive (wie bestimmte Weichmacher) zugesetzt werden, bestenfalls um 160°C. Somit schmilzt PVA bei zu hohen Temperaturen, um im Rotary-Dies-Prozess zum Herstellen von echt verschweißten Siegelnähten eingesetzt werden zu können. Insbesondere ist PVA nicht für die Verkapselung wässriger Zubereitungen, die bereits um 100°C zu kochen beginnen, geeignet.

Weiters haben herkömmliche Verfahren, in welchen kaltwasserlösliche Verpackungsfolien aus Polyvinylalkohol hergestellt werden, den Nachteil, dass nach den wissenschaftlichen Untersuchungen der EMPA, siehe H.Schönberger, U.Baumann und W.Keller; Textilveredelung 31 (1996) Nr.1 / 2 Seite 19 - 26, bekannt geworden ist, dass Polyvinylalkohol (PVA) nicht immer ausreichend in Kläranlagen abgebaut werden kann. Vielmehr zeigt sich aufgrund der hohen Arrhenius'schen Aktivierungsenergie, welche für die C-C-Spaltung beim Abbau des PVA-Moleküls notwendig ist, eine sehr ausgeprägte Temperaturabhängigkeit. Daher kann der Abbau der PVA-Moleküle nur während der Sommermonate, wenn die Temperatur des Abwassers in den Klärbecken über 12°C liegt, ausreichend schnell, d.h. gemäss den Erfordernissen der geltenden Regelungen in der Europäischen Union für "biodegradable substances" (biologisch abbaubare Stoffe) verlaufen.

Dazu kommt der Nachteil, dass Polyvinylalkohol ein rein synthetisches Material ist, welches nicht aus nachwachsenden Rohstoffen hergestellt werden kann.

Kaltwasser-lösliche Einkapselungsmaterialien würden aber einen wesentlichen technischen Fortschritt bedeuten, da viele einzeln zu dosierende Packungsgüter bei Raumtemperatur oder darunter verwendet werden. Vielfach besteht auch der Bedarf, dass sich die Einkapselungsmaterialien bei Raumtemperatur oder darunter rückstandsfrei auflösen sollen. In diesem Zusammenhang sei hingewiesen auf Badezusatz-Kapseln, deren Einkapselungsmaterialien keine Schmutzränder an der Badewanne hinterlassen sollen, sowie auf Paint-Balls (mit Farbe gefüllte Kugeln), welche sich im Wald oder auf Spielplätzen unter dem Einfluss natürlicher Feuchtigkeit restlos auflösen und außerdem vollständig biologisch abbaubar sein sollen.

Aufgabe der vorliegenden Erfindung ist es daher ein Verfahren der eingangs genannten Art anzugeben, welches es gestattet :
Blasenfreie, voll gefüllte und dadurch formstabile, kompakte und damit gut für die Einzeldosierung handhabbare Kapseln herzustellen, welche einen homogenen, echt verschweißten, in sich verlaufenden Siegelrand aufweisen, und wobei das Verkapselungsverfahren maschinell, schnell, einfach und damit wirtschaftlich effizient erfolgen soll. Dadurch sollen tatsächlich stabil versiegelte Kapseln ohne "weak-seals", d.h. Kapseln mit zufriedenstellender Siegelnahtfestigkeit bereitgestellt werden. Diese weisen echte Schweißnähte, also keine Klebenähte auf. Weiters sollen ein Verfahren angegeben, sowie das dafür notwendige Verpackungsmaterial bereitgestellt werden.. Das verwendete Verpackungsmaterial soll im Einklang mit den geltenden Gesetzen über biologische Abbaubarkeit über das Abwasser oder direkt in den Vorfluter entsorgt werden können, wobei auch die geltenden gesetzlichen und ökologischen Regelungen hinsichtlich Umweltverträglichkeit erfüllt sein sollen. Das bedeutet, dass das verwendete Verpackungsmaterial gut und rasch kaltwasserlöslich sein soll, sodass es sich im Anwendungsfall oder im Freien bei Regen rasch und rückstandsfrei auflöst. In Kläranlagen soll das verwendete Verpackungsmaterial vollständig und schnell abgebaut werden, wobei es gemäss den neuesten Regelungen, wie der deutschen Verpackungsverordnung (VerpVO vom 21.8. 1998), überwiegend aus nachwachsenden Rohstoffen bestehen soll.

Überraschenderweise wurde nun gefunden, dass Systeme bestehend aus 1) speziellen Acetal-Folien, welche durch Säure katalysierte Acetalisierungsreaktion von Polyvinylalkohol mit Stärke oder Stärkederivaten - sogenannte PVACLs - hergestellt sind, obwohl sie die nach dem Stand der Technik, wie der WO-A-97/35 537, für Verschweißbarkeit geforderten Polymereigenschaften nicht aufweisen, also im G'/G"-ω-Diagramm im Kreisfrequenzbereich von 0,1 bis 1000 s⁻¹ bei Temperaturen knapp unterhalb ihres Erweichungspunktes keinen Cross-Over-Point (Eins-Punkt) zeigen, und aus bzw. in Gegenwart von 2) Destrukturierungsmitteln - das sind Substanzen, welche geeignet sind, vernetzende Wasserstoffbrücken in Polyolen zu brechen - unter bestimmten Bedingungen, nämlich 3) in einem Kaltsiegel-Verfahren eingesetzt werden können und zu Verpackungen bzw. Verkapselungen mit stabilen Siegelnähten führen. Das erfindungsgemäß angewandte Kaltsiegel-Verfahren ist im Unterschied zum Heißsiegel-Verfahren dadurch gekennzeichnet, dass die zu verbindenden Folien nicht im Kontakt miteinander erwärmt werden, wobei die Erwärmung auch nur auf mittlere Folien-Temperaturen, d.h. unterhalb der nach üblichen Verfahren gemessenen (das ist bei etwa 1 atm Druck und nach Gleichgewichtseinstellung bei Raumtemperatur bei relativen Luftfeuchtigkeitswerten zwischen 45 und 55 %) Schmelz- bzw. Erweichungspunkte erfolgt. Trotz dieser "unüblichen" Voraussetzungen lassen sich die erfindungsgemäß verwendeten Verpackungsmaterialsysteme zur Herstellung von stabilen Einzelpackungen einsetzen.

Erfindungsgemäß wird also im Gegensatz zum Stand der Technik kein Heißsiegel-Prozess, sondern ein Kaltsiegel-Prozess benutzt, bei welchem kein Verklebevorgang erfolgt, sodass auch keine Adhäsionsverbindung erzeugt wird. Vielmehr wird aufgrund der erfindungsgemäßen Bedingungen, nämlich der besonderen Eigenschaften der PVACL-Folien in Verbindung mit den erfindungsgemäß eingesetzten Destrukturierungsmitteln, eine echte Verschweißung, das heißt eine echte Kohäsionsverbindung erzeugt.

Obwohl das Herstellen dicht versiegelter Kapseln bei Einbringung von Packungsgut mit Trennmittel-Wirkung, wie tensidische Zube-reitungen, im Gegensatz zu den Siegelverfahren nach dem bekannten Stand der Technik nach diesen Verfahren besonders schwer möglich ist, da nach der Geometrie der Siegelnaht im Rotary-Dies-Verfahren diese niemals als extrakapsuläre, breite Flach-Siegelnaht außerhalb der Kontaktzone mit dem Packungsgut liegt, sondern immer direkt an das Füllgut anliegt, ist das erfindungsgemäße Verfahren auch für tensidisches Packungsgut geeignet.

Der Unterschied zu den Verfahren nach dem bekannten Stand der Technik wird unter anderem dadurch bewiesen, dass die bekannten Abhilfemaßnahmen zur Freispülung der Siegelnaht von Benetzungen durch das Packungsgut im Kaltsiegel-Prozess für die PVACLs ohne Cross-Over-Point ohne Anwendung der erfindungsgemäßen, bestimmten Bedingungen (Destrukturierungsmittel) nicht funktionieren zur Herstellung von stabilen Siegelnähten. Es wird in diesem Zusammenhang auf die Verbesserung der Siegelungsfähigkeit in Gegenwart von Wasser gemäss der WO-A1-03/008180, s.a. Vergleichsbeispiel 4 hingewiesen.

Ein weiterer Unterschied ist, dass einfaches Anlösen der PVACL-Folien, beispielsweise durch Benetzen mit Wasser als Lösungsmittel, noch immer nicht zu stabilen Siegelnähten im Rotary-Dies-Verfahren bei das Packungsgut schonenden Temperaturen führt.

Im Gegensatz zu den bekannten Heißsiegel-Verfahren, bei welchen die zu versiegelnden Verpackungsfolien in a) Kontakt miteinander und b) auf Temperaturen oberhalb ihres Schmelzpunktes (Schmelzintez-vall), der über dem Siedepunkt von Wasser liegt, erhitzt und dadurch verschweißt werden müssen, ist somit auch Gegenstand der Erfindung ein sogenanntes "Kalt-Siegeln", bei dem die Gefahr des Kochens der wasserhaltigen Verpackungsfolien bzw. der wasserhaltigen Packgüter vermieden wird. Es wird also nur ein zum Heißsiegeln analoges Verfahren ohne Siegelrand angewandt, welches dadurch gekennzeichnet ist, dass die erfindungsgemäßen Systeme aus speziellen, Weichmacher- und Wasserhaltigen Acetalen hergestellt werden. Darunter sind die durch Säure katalysierte Acetalisierungsreaktion von Polyvinylalkohol mit Stärke oder Stärkederivaten hergestellten Vinylalkoholcopolymere (PVACL) zu verstehen , siehe EP-A-771 329. Davon wird eine Gruppe von PVACLs ausgewählt, welche ganz bestimmte Weichmacher und Wassergehalte aufweist und welche im Rotary-Dies-Prozess mit Destrukturierungsmitteln unter bestimmten Bedingungen, nämlich einem zum Heißsiegeln analogen Kaltsiegeln ohne Kontakt zueinander, nur bis deutlich unter ihrem üblichen Schmelzpunkt erwärmt werden und dann ohne weitere Temperaturerhöhung miteinander in Kontakt gebracht und unter Druck verschweißt werden.

Dabei wird ein, ähnlich wie die bekannte "Regelation des Eises" sich auswirkender Effekt ausgenutzt, indem die erfindungsgemäßen Systeme aus PVACLs in Verbindung mit den Wasserstoffbrücken-brechenden Destrukturierungsmitteln in ihren Schmelzviskositäts- vs. Druck-Diagrammen sogenannte Kennlinien mit negativem Anstieg aufweisen, wonach es unter Druck und/oder der Einwirkung von Friktionskräften zu einer Reduktion der Schmelzviskosität kommt und damit zu einem besseren Fliessen, welches sich im Rotary-Dies-Verfahren ähnlich auswirkt wie ein Aufschmelzen bzw. Erweichen unterhalb des üblichen (d.h. bei Normaldruck von lat) Schmelz- bzw. Erweichungspunktes, wodurch es durch aus dem Folieninneren herausgedrücktes, fließfähigeres Material zu einem echten Schweißvorgang anstelle einer Verklebung kommt.

Der erfindungsgemäß angewandte "Kalt-Siegelprozess" unterscheidet sich somit auch von den nach dem Stand der Technik bekannten, sogenannten "Kalt-Schweiß-Prozessen", wie sie beispielsweise zum Verkleben von PVC-Rohren mit PVC-Rohrmuffen angewendet werden, wobei die PVC-Oberfläche mit einer Lösung desselben Kunststoffs, also PVC oder eine niedrigmolekularen Variante davon, in einem Lösungsmittel für PVC bestrichen, dadurch angelöst und dann aneinandergefügt werden. Dabei handelt es sich somit - trotz des Namens "Kalt- (Ver) -Schweißung" auch nur um einen Kalt-Lösungs-Verklebungsprozess.

Unter der Bezeichnung "deutlich unterhalb ihres Schmelzpunktes (Schmelzbereiches)" soll für die erfindungsgemäßen Bedingungen ein Abstand von mindestens 5°C unter dem mittels DSC feststellbaren Schmelz- bzw. Erweichungspunkt verstanden werden. In einer bevorzugten Ausführungsform soll die Oberflächentemperatur der zu verbindenden Filme zum Zeitpunkt des Zusammenpressens zum Siegeln und an diesem Ort und während der Befüllung mit dem Füllgut im Bereich zwischen 20 bis 5°C unterhalb des mittels DSC feststellbaren Schmelz- bzw. Erweichungspunktes liegen; besonders bevorzugt ist der Bereich zwischen 5 bis 10°C unterhalb des mittels DSC feststellbaren Beginns des Schmelzintervalls.

Beispielsweise kann nach dem erfindungsgemäßen Verfahren ein PVACL-Film, welcher nach der Differenzial-Thermoanalyse (DTA bzw. Differenzial Thermo-Scanning; DSC) einen Schmelzbereich von ca. 151 - 166°C hat, bereits nach Vorerwärmung auf eine mittlere Filmtemperatur von maximal 145°C dauerhaft fest gegen einen gleichartigen PVACL-Film gesiegelt werden.

Arbeitet man nach dem Rotary-Dies-Prozess, so werden in der Regel mittlere Temperaturen des zu thermoformierenden und zu siegelnden Films erreicht, die besonders deutlich unter der Temperatur des Heizsegments liegen, indem das Aufheizen der den Formwalzen zugeführten Filme hauptsächlich nur an dem Heizsegment zwischen den beiden voneinander getrennt zugeführten Filmen erfolgt. Auch hier besteht a) kein direkter Kontakt zwischen den Filmen und dem Heizsegment, da dazwischen in der Regel noch ein Öl als Gleitmittel eingesetzt wird, welches als Wärmeübergangswiderstand wirkt und b) tritt beim Thermoforming-Vorgang, also dem Hineindrücken der Filme in die Näpfchen der Formwalzen an diesen schon vor der Siegelung der erste Wärmeverlust ein, und des weiteren erfolgt c) durch das eingespritzte Packungsgut auch noch vor dem Siegeln an den einander zugewandten Seiten der Filme eine zusätzliche Abkühlung.

Diese Verfahrensweise in Verbindung mit dem erfindungsgemäßen Kalt-Siegelprozess wirkt sich besonders vorteilhaft bei der Herstellung von einzelnen Dosen in Form von Kapseln mit galenischen Zubereitungen aus, welche mit wärmeempfindlichen Medikamenten, wie beispielsweise Suspensionen von Antibiotika in Polyäthylenglycolen etc. befüllt sind.

Die für die erfindungsgemäßen Systeme einzusetzende Komponente (1) sind spezielle Acetale aus Polyvinylalkohl und Stärke oder Stärkederivaten (PVACLs) welche durch Säure-katalysierte Acetalisierung von 30 - 65 Gew-% Stärke oder Stärkederivaten mit 70 - 35 Gew-% Polyvinylalkohl, vorzugsweise 35 - 45 Gew-% Stärke mit 65 - 55 Gew-% PVA oder Gemischen verschiedener PVA-Typen, hergestellt werden, wobei die Polyvinylalkoholkomponente mittlere Molekulargewichte (Gewichtsmittel) zwischen 25.000 und 130.000, vorzugsweise zwischen 30.000 und 70.000 aufweist, und durch partielle Verseifung von Polyvinylacetat bis zu einem Verseifungsgrad zwischen 80 und 92 Mol-%, vorzugsweise zwischen 85 und 90 Mol-% gebildet ist, und wobei die Stärkekomponenten in den für das erfindungsgemäße Verfahren bzw. die erfindungsgemäßen Verpackungen geeigneten PVACL aus der Gruppe native Kartoffelstärke, Mais-, Reis- oder Tapiokastärke ausgewählt ist. Die Stärkederivate sind teilweise abgebaute Stärken, welche auf mittlere Molekulargewichte (Gewichtsmittel; M_{w}) zwischen 50.000 und 500.000, vorzugsweise auf M_{w} = 150.000 und 300.000 in ihrem Molekulargewicht durch oxidativen Abbau reduziert sind und welche weniger als 0,01 Gew-% Dialdehydstärke enthalten. Vorzugsweise handelt es sich dabei um solche, welche zwischen 5 bis 20 Mol-% (bezogen auf die C₆-Einheiten) propoxyliert sind. Nach der Acetalisierung zur Herstellung der PVACLs werden die im Reaktionsgemisch enthaltenen Säurekatalysatoren wieder neutralisiert. Als Neutralisationsmittel kommen alle Protonenakzeptoren wie Ammoniak, wässrige Ammoniumhydroxidlösung, Natronlauge aber auch Amine in Frage. Ein bevorzugtes Neutralisationsmittel ist Triethanolamin.

Die Weichmacher in den erfindungsgemäß zu verwendenden PVACLs sind Glycerin und/oder Äthylenglycol oder Propylenglycol, welche auch noch zusammen mit sogenannten Co-Weichmachern wie Polyglycerin oder Polyäthylenglycolen eingesetzt werden können. Die Anteile der Summe dieser Weichmacher und Co-Weichmacher liegen in einem Bereich von 10 bis 30 Gew-% bezogen auf die Summe der Gewichte der PVA- und der Stärke- bzw. Stärkederivatkomponenten, vorzugsweise in einem Bereich von 11 bis 20 Gew-%. Die Co-Weichmacher können zwischen 0 und 70 Gew-%, vorzugsweise zwischen 0 und 40 Gew-% der Summe aus Weichmacher und Co-Weichmacher ausmachen.

Der Wassergehalt der erfindungsgemäß zu verwendenden PVACLs - bestimmt nach Karl-Fischer oder bevorzugt über den Trocknungsverlust nach 24 Stunden bei 105°C - liegt zwischen 7 und 25 Gew-%, vorzugsweise zwischen 10 und 20 Gew-% (bezogen auf Gesamt-PVACL). Dabei sind die Weichmacher- und Wasseranteile so einzustellen, dass Filme davon, welche in einem Vorversuch durch Extrusion hergestellt wurden, im Universalrheometer der Fa. Paar-Physics mit Platte-Platte-Mess-System im Oszillationsmodus und nach Besprühen mit einem der geeigneten Destrukturierungsmittel und 5 s Ruhezeit im Relaxationseenthalpie-/Relaxationszeit-Diagramm ein Maximum der Relaxationsenthalpie bei Zeiten unter 2 s aufweisen, was in einem Vorversuch und Messungen am Universalrheometer leicht möglich ist.

Als für die erfindungsgemässen Systeme einzusetzende Komponente (2) das sind die Destrukturierungsmittel, kommen Stoffe infrage, die geeignet sind, Vernetzungen über Wasserstoffbrücken zu brechen oder solche Netzwerke zu unterbrechen.

Das sind also Stoffe des Typs A, die eingemischt in PVACLs oder in Kontakt mit PVACL-Filmen an deren Oberfläche selbst in der Lage sind, Wasserstoffbrückenbindungen einzugehen und dadurch bestehende, vernetzende Wasserstoffbrücken zu ersetzen ("abzukoppeln"), aber dabei nicht bi- oder polyfunktionell sind, sodass sie selbst zu keiner Netzwerkbildung befähigt sind, sondern nur zu einer einfachen Absättigung einer Wasserstoffbrückenbildungs-fähigen funktionellen Gruppe, beispielsweise einer OH-Gruppe in PVACL, im Polymer. Beispiele für derartige "Typ-A-Destrukturierungsmittel" sind sogenannte Montansäuren und/oder einwertige Alkohole, die dargestellt werden durch Ester von Montansäuren mit Ethylenglycol und/oder 1,3-Butandiol und/oder Glycerin, Substanzen wie sie in der Richtlinie 93/10/EWG der Kommission vom 15.März 1993 als zulässige Verpackungs-folien-Additive für das Inkontaktbringen mit Lebensmitteln gelistet sind und/oder anionische und nichtionische Tenside wie n-Dodecylsulfat, Alkylsulfonate, Alkylphenol- oder Alkylalkohol-Ethylenoxid-Addukte, oxidierte - vorzugsweise niedrigmolekulare - Polyethylene, insbesondere einwertige, verzweigte C₁₀ -C₁₆ -Alkohole oder Ethoxylierungsprodukte dieser oder deren mehrwertiger Analoga mit 5 - 20, vorzugssweise 5 -10 anaddierten Ethoxy-Gruppen. Besonders bevorzugt sind einwertige, sogenannte GUERBET-Alkohole. Das sind verzweigtkettige Alkohle, die aus Fettalkohlen durch Selbstkondensation unter Katalyse durch Natrium oder Kupfer bei Temperaturen um 200°C und unter Druck entstehen, wie in der EP A 0 970 998 beschrieben (siehe Handelsprodukt "Stenol" der Fa. Herkommer & Bangerter GmbH & Co.KG).

Destrukturierungsmittel können aber auch solche des Typs-B sein, das sind sogenannte "innere Destrukturierungsmittel", also solche, welche die Aufgabe der Abkoppelung von Netzwerk-bildenden Wasserstoffbrücken dadurch bewirken, dass sie mit dem "zu entnetzenden" Polymermolekül chemisch reagieren und sich dadurch an einen Teil von dessen Wasserstoffbrücken-bildenden, funktionellen Gruppen anheften und auf diese Weise durch deren Absättigung und/oder durch die sterischen Effekte, welche sie hinsichtlich Aufweitung des Polymermolekülknäuls bewirken, zu einer teilweisen Entnetzung führen. Dabei kann diese "Anheftung" durch chemische Reaktion bereits während der Herstellung der PVACLs in der Reaktionsextrusion stattfinden oder aber auch danach; - unter Umständen sogar im kalten Zustand durch Nachreaktion des in die PVACL-Masse eingemischten Destrukturierungsmittels. Beispiele für solche "Typ-B-Destrukturierungsmittel" sind Aldehyde oder Ketone wie Benzaldehyd oder Naturstoffe, wie Poly-, Oligo- oder Monosaccharide, Pektine, Hyaluronsäure etc. oder deren Abbauprodukte, welche Carbonylgruppen oder präsumtive Carbonylgruppen enthalten und welche über diese mit den freien OH-Gruppen der Vinylalkohlbereiche der PVACL-Polymermoleküle unter Halbacetalbildung reagieren können.

Für die Realisierung der erfindungsgemässen Systeme können die beiden Komponenten, das sind 1) PVACL und 2) Destrukturierungsmittel), sowohl als homogene Mischung in Form von Kombinationssystemen miteinander oder einfach in Kontakt miteinander, oder einreagiert im Falle von Typ-B-Destrukturierungsmitteln, bereitgestellt werden.

In einer besonderen Ausführungsform zur Herstellung der Kombinationssysteme werden die Destrukturierungsmittel, also die Komponenten (2), direkt vor Verwendung der Systeme bereits in die PVACLs eingebracht. Dies erfolgt entweder in einer bevorzugten Herstellungsverfahrensvariante direkt, d.h. "as is" (d.h. unbehandelt, unverdünnt), durch Einkneten in die PVACL-Schmelze nach deren Neutralisation unmittelbar nach deren Herstellung durch Säure katalysierte Acetalisierung von PVA mit Stärke oder Stärkederivaten im Reaktionsextruder, wie ein Zweischneckenextruder, wobei eine Konzentration des Destrukturierungsmittels zwischen 0,5 und 10 Gew-%, vorzugsweise zwischen 0,5 und 5% im PVACL-Gemisch einzustellen ist.

Alternativ können die Destrukturierungsmittel, also die Kombinationssystem-Komponenten (2) zu ihrer besseren Handhabbarkeit (Pumpbarkeit) bei der Herstellung der erfindungsgemäßen Verpackungssysteme als verdünnte Zubereitungen, d.h. als Lösungen, Emulsionen oder Suspensionen in Alkoholen, Glycerin oder Wasser oder Gemischen davon eingebracht werden. Dabei sind Destrukturierungsmittel-Konzentrationen in solchen Zubereitungen vorteilhaft, welche zwischen 1 - 80%, vorzugsweise zwischen 10 - 60% in Wasser liegen und durch Einkneten im Reaktionsextruder nach der Neutralisationsstufe bis auf einen Gesamtgehalt an Destrukturierungsmittel im PVACL-Gemisch zwischen 0,1 und 10% eingetragen werden können.

Die Destrukturierungsmittel als Kombinationssystem-Komponenten (2) können zur Herstellung der erfindungsgemäßen Verpackungssysteme aber auch durch nachträglichen, oberflächlichen Auftrag derselben auf die zur Verkapselung eingesetzten PVACL-Filme bereitgestellt werden und zwar wieder entweder "as is", oder als verdünnte Zubereitungen, also als Lösungen, Emulsionen oder Suspensionen in Alkoholen, Glycerin oder Wasser oder Paraffinöl oder Gemischen davon. Im letzteren Fall werden die Destrukturierungsmittel in Konzentrationen zwischen 1 bis 30%, vorzugsweise zwischen 2 - 20% in Wasser angewendet. Die Anwendung kann durch übliche Aufbringungsmethoden wie Aufsprühen, Aufrakeln oder Aufstreichen etc. erfolgen, und zwar entweder unmittelbar im Rotary-Dies-Verfahren vor der Zuführung der Filme zum Heizsegment für die Verkapselung oder aber auch schon bis zu 2 Stunden vorher.

Besonders bevorzugt ist die Aufbringung direkt im Rotary-Dies-Prozess auf die laufenden, dem Heizsegment zugeführten Filme, also unmittelbar vor der Verkapselung, sodass es eben zu keiner klebrigmachenden partiellen Anlösung der Filme kommt, was zu Problemen durch Ankleben der Filme am Heizsegment führen würde. Bei Verfahren, die nicht dem erfindungsgemäßen Kalt-Siegelverfahren entsprechen, wird zwar durch die für Heißsiegelverfahren notwendige höhere Temperatur am Heizsegment eine partielle Verdampfung des Anlösemittels bewirkt, welche in einem, dem bekannten "Leidenfrost-Effekt" analogen Effekt, zur Ausbildung einer Dampf-Sperrschicht zwischen Film und Heizsegment führt, auf welcher die Filme wie auf einem Luftkissen schwebend vor dem Ankleben am Heizsegment bewahrt werden; - allerdings unter den übrigen, für Heißsiegelverfahren bekannten Nachteilen (z.B.: Temperaturbelastung, Bildung von Dampfblasen etc.).

Eine besondere Ausführungsform bei der Verwendung der erfindungsgemäßen Verpackungssysteme ist das Einbringen der Destrukturierungsmittel in die PVACL-Schmelze bei deren Herstellung im Extruder und zwar unmittelbar nach der Neutralisation des Acetalisierungskatalysators entweder "as is" d.h. in unbehandelter Form oder als wässrige Emulsionen, Lösungen oder Suspensionen, anschließendes Herstellen von Granulaten aus diesen Schmelzen durch Strangextrusion, Strangkühlung und Granulation, gefolgt von einer Filmextrusion aus solchen Granulaten, mit der besonders bevorzugten Ausführungsform einer zusätzlichen Aktivierung der Destrukturierungsmittel durch Anblasen der Filme mit Wasserdampf, wie Sattdampf bei Temperaturen zwischen 100 und 160°C unmittelbar vor der Zuführung dieser PVACL-Filme zum Heizsegment im Rotary-Dies-Verfahren und nachfolgende Kapselbildung sowie Siegelung.

In einer einfacheren Ausführungsform können aber auch die Destrukturierungsmittel oder Lösungen, Suspensionen oder Emulsionen davon, vor dem Aufgleiten der PVACL-Filme auf das Heizsegment im Rotary-Dies-Verfahren oder unmittelbar vor dem Siegelungsprozess auf die zu verbindenden Folien auf die der Gegenfolie zugewandten Seite aufgesprüht oder aufgestrichen werden. Als Trägermedium für derartige Destrukturierungsmittel-Lösungen, -Suspensionen oder -Emulsionen eignen sich bei Raumtemperatur flüssige ein- oder vorzugsweise mehrwertige Alkohole, vorzugsweise aber auch Wasser.

Werden die Destrukturierungsmittel nicht oder nur teilweise in die PVACLs noch vor deren Granulation eingearbeitet, sondern soll dies erst geschehen, nachdem daraus bereits Filme hergestellt wurden, so können die Destrukturierungsmittel auch noch unmittelbar vor dem Siegeln der daraus hergestellten Folien, beispielsweise im Rotary-Dies-Verfahren noch vor dem Heizsegment, auf die der Gegenfolie zugewandten Seite aufgesprüht oder aufgestrichen werden und es ergibt sich eine besonders vorteilhafte Verfahrensvariante, wenn nur wenig Destrukturierungsmittel im Inneren des PVACL-Films gebunden bleibt, sondern dieses parktisch ausschliesslich nur dort eingebracht wird, wo es gebraucht wird. Dies wird insoferne erreicht, als mit oder ohne Zugabe von Viskositäts-Reduzierungsmitteln wie flüssiges Wasser als Verdünnungsmittel, durch Einwirkung von Ultraschall das Destrukturierungsmittel vor dem Zusammenpressen in die zusammenzusiegelnden Folien durch Ultraschall-Diffusion eingebracht wird. Dabei führt diese Ultraschalleinwirkung nicht zu einer Ultraschallschweißung, da der Ultraschall durch PVACL-Filme praktisch nicht absorbiert wird und daher kaum zu einer Temperaturerhöhung beiträgt.

Besonders bevorzugt ist die Herstellung der erfindungsgemäßen Verpackungssysteme im Reaktionsextruder, wobei darin die PVA-Rohstoffe mit den Stärke- bzw. Stärkederivat-Rohstoffen in Gegenwart der erfindungsemäss einzustellenden Weichmacheranteile, d.i. vorzugsweise Glycerin und Wasser in Gegenwart von Phosphorsäure oder p-Toluolsulfonsäure, bei Temperaturen zwischen 140 und 160 °C durch Acetalisierung umgesetzt werden. Nach Erreichen von Umsetzungsgraden von mehr als 60% d.Th. - vorzugsweise mehr als 84% d.Th - wird das Reaktionsgemisch mit Triäthanolamin neutralisiert. Anschließend wird unter Kühlen der Anteil an Destrukturierungsmitteln - letztere vorzugsweise als wässrige Emulsionen mit Konzentrationen, die es erlauben, bei Anwendung von Destrukturierungsmittelzubereitungen mit Destrukturierungsmittelkonzentrationen von 5 bis 10 Gew-% im PVACL-End-Gesamtwassergehalte, messbar nach Karl-Fischer - oder vorzugsweise gemessen über den Gewichtsverlust nach 24-stündiger Trockung bei 105°C -, unter Berücksichtigung der Verdampfungsverluste an der Strangextrusionsdüse und bei der Granulation - in einem Bereich von 7 bis 25 Gew-% eingestellt.

Im Gegensatz zu thermoplatischer Stärke, welche zwar vollständig aus nachwachsenden Rohstoffen hergestellt ist, zeigen PVACLs, unabhängig von ihrer Kaltwasserlöslichkeit, auch noch den Vorteil, dass sie durch den Anteil an Polyvinylalkohl in absolut standardisierter Form hergestellt werden können und nicht, wie es bei reinen Naturstoffen der Fall ist, von Charge zu Charge wechselnde Eigenschaften aufweisen. Dies ist ein wesentlicher Verfahrensvorteil bei so komplexen Prozessen, wie das Rotary-Dies-Verfahren, bei welchem es auf besonders hohe Präzision der einzuhaltenden Eigenschaftsparameter ankommt, und bei welchem jede Prozessstörung oder -unterbrechung vermieden werden soll.

Dabei können die PVACLs für das erfindungsgemäße Verfahren bzw. für die erfindungsgemäßen Verpackungen sowohl als Gieß- als auch als Extrusionsfolien dem Befüll- und Versiegelungs-Prozess zugeführt werden. Bevorzugt sind Extrusionsfolien, also Folien, welche nach einem üblichen Cast(Gieß)-Extrusionsprozess durch Extrusion von PVACL-Granulat durch eine Schlitzdüse und Ausformung auf die gewünschte Foliendicke über eine sogenannte "chill roll"(Kühlwalze) hergestellt werden.

Die Dicke der PVACL-Folien, die erfindungsgemäß der Befüll- und Versiegelungszone zugeführt werden, muss zwischen 100 und 1000 µm liegen. Bevorzugt sind Foliendicken von 300 - 800 µm.

Durch den erfindungsgemäßen Heisssiegel-analogen "Kaltsiegel"-Verbindungs-Vorgang hat das Verfahren auch den Vorteil, dass damit überraschenderweise die Siegelung bei Folien-Temperaturen weit unterhalb des üblichen Schmelzintervalls durchgeführt werden kann, und damit das Füllgut unterhalb des Siedepunktes von Wasser eingesiegelt werden kann, wodurch es nicht zum Kochen der Folienoberfläche beim Siegeln kommt. Dieses Kochen erzeugt unerwünschte Blasen in der Siegelnaht und damit nicht nur unschöne, trübe Siegelnähte sondern auch Schwachstellen in der Siegelnaht. Dadurch kann nach dem erfindungsgemäßen Verfahren auch besonders Wärme-empfindliches Packungsgut, wie enzymhältige Waschmittel, sicher verpackt werden, ohne dass das Packungsgut durch hohe Siegeltemperaturen geschädigt werden könnte. Schließlich bietet das erfindungsgemäße Verfahren im Rotary-Die-Prozess auch den Vorteil, dass dadurch vollkommen mit dem Packungsgut prall gefüllte Kapseln hergestellt werden können, welche dadurch fest und formstabil sind. Es werden daher keine "schlabberigen Pouches" gebildet, in denen es infolge der bei anderen Verfahren anzuwendenden, vergleichsweise hohen Siegeltemperaturen zu nicht unbedeutender Wasserdampfentwicklung aus dem Packungsgut kommt. Es werden auch keine Anlöseverfahren auf den Rotary-Die-Prozess angewendet, bei welchen Lösungsmittel in Form großer Wasser-Mengen eingesetzt werden, sodass eine Folienanlösung eintreten kann, wobei jedoch der Wasserdampf beim Siegeln die Packung aufbläht, aber nach seiner Kondensation nach dem Abkühlen auf Gebrauchstemperatur das von ihm beim Siegeln eingenommene Volumen als Leer-Volumen übrig lässt. Es werden somit Packungen bereitgestellt, welche nie voll sind, sondern "Blasen" d.h. Leervolumina enthalten.

Die Erfindung wird durch nachstehende Beispiele sowie anhand der Figurendarstellungen 1 bis 4 näher erläutert, wobei Fig. 1 einen Beutel(pouch) mit Fehlstellen gemäss Stand der Technik, Fig.2 und 3 Vorrichtungseinheiten für ein Rotary-Dies-Verfahren und Fig. 4 das G'/G"-ω-Relaxations-Diagramm für Gelatine und PVACL zeigen.

### Vergleichsbeispiel 1:

Im Rotary-Dies-Verfahren - wie in Fig. 2 gezeigt - wurde den beiden Formwalzen 6,7 direkt aus je einem Flachfolienextruder ein ca. 500 µm dicker Gelatinefilm 11,11'zugeführt.
An einer Probe dieses Gelatine-Films wurden in einem separaten Versuch bei 35°C im Universalrheometer der Fa. Paar-Physics mit Platte-Platte-Mess-System im Oszillationsmodus im Speichermodul (G')- / Verlustmodul (G")-Kreisfrequenzdiagramm ein Cross-Over-Point (Eins-Punkt) bei ω = 5 s⁻¹ gefunden, was zeigt, dass es sich dabei um ein "suitable", also um ein geeignetes Polymer im Sinne der WO-A- 97/35 537 handelt.

Als Packungsgut 10 wurde ein Standard-Badeöl verwendet.

Das Zuführungssegment 9 war auf 42 °C aufgeheizt, wodurch die Filme vor dem Befüllen auf eine Oberflächen-Temperatur von 40°C aufgeheizt wurden (pyrometrische Fernmessung über IR).

Nach dem Zusammenpressen der beiden Filme am unteren Trommelende wurden sofort einwandfreie, dichte, blasenfrei befüllte Kapseln 12 erhalten, welche jedoch, da das Einkapselungsmaterial Gelatine war, sich nur in heißem Wasser lösten, jedoch in Kaltwasser ungelöst blieben.

### Vergleichsbeispiel 2:

Im Rotary-Dies-Verfahren - wie in Fig. 2 gezeigt - wurde den beiden Formwalzen 6,7 direkt aus je einem Flachfolienextruder ein ca. 500 µm dicker PVA-Film 11, 11' zugeführt, der aus MOWIOL® 18-88 der Firma Kuraray Specialities Europe GmbH (Frankfurt, D), hergestellt wurde. Dieser wurde "pregeblendet" (vorgemischt), um einen plastischen Zustand zu erreichen, wobei nach den Herstellerangaben mit einer Mischung aus Glycerin und Wasser (10% Glycerin + 4% Wasser auf PVAL) gearbeitet wurde. (Schmelz- bzw. Erweichungspunkt um 160 °C; Cross-Over-Punkt(Eins-Punkt) gemessen im Universalrheometer der Fa. Paar-Physics mit Platte-Platte-Mess-System im Oszillationsmodus im Speichermodul (G')- / Verlustmodul (G")-Kreisfrequenzdiagramm bei ω = 200 s⁻¹). Als Packungsgut 10 wurde ein Standard-Badeöl verwendet.

Das Zuführungssegment 9 war auf eine Temperatur von 170 °C eingestellt, wodurch die Filme 11, 11' vor dem Befüllen auf eine mittlere Temperatur von 155°C aufgeheizt wurden (pyrometrische Fernmessung über IR).

Nach dem Zusammenpressen der beiden Filme an den Stegen der Näpfchen 8 am unteren Formwalzenende wurden jedoch keine dichten Kapseln erhalten, vielmehr zerfielen die ausgestanzten Kapseln 12 sofort in zwei Teile und liefen aus.

Auch eine weitere Erhöhung der Zuführungs-Segmenttemperatur auf 180°C ergab keine stabilen Kapseln, dafür begann das Füllgut 10 beim Einpressen in die Kapselformen zu kochen.

### Vergleichsbeispiel 3:

Der Rotary-Dies-Verkapselungsversuch wird wie in Vergleichsbeispiel 2 (Heizsegment auf 170°C eingestellt, PVA-Filmtemperatur 155°C) durchgeführt, jedoch mit dem Unterschied, dass entsprechend den Empfehlungen aus der WO-A-97/35 537 der Heißsiegelvorgang nach Aufstreichen von so großen Wassermengen auf der Oberfläche von zumindest einem der beiden Filme 11, 11' vorgenommen wurde und der so vorbehandelte Film ca. 5 Minuten mit feuchter Oberfläche ruhen durfte, dass dieser Film dadurch echt angelöst wurde.

Es wurden zwar unmittelbar nach dem Herausfallen der Kapseln unter den Formwalzen geschlossene Kapseln erhalten, diese wurden aber nach wenigen Stunden Lagerung undicht und zerfielen später bereits bei geringer mechanischer Belastung wieder in zwei Hälften. Eine mikroskopische Untersuchung der Siegelkanten zeigte, dass diese nie echt verschweißt, sondern nur verklebt und daher nur kurzzeitig reversibel verbunden waren, d.h. es lagen sogenannte "weak-seals" vor. Diese Verpackungsformen entsprechen der gemäss Fig.1, welche Fehlstellen 3 in den Siegelrändern 2 zeigen. Durch diese Fehlstellen kann auch beim Abpacken Luft eindringen, so dass Luftblasen 4 und damit forminstabile Packungen 1 entstehen.

### Beispiel 1:

Im Rotary-Dies-Verfahren - wie in Fig. 2 gezeigt - wurde den beiden Formwalzen 6,7 direkt aus je einem Flachfolienextruder ein ca. 600 µm dicker PVACL-Film 11, 11' zugeführt.

An einer Probe dieses PVACL-Films im Normalzustand wurde in separaten Versuchen mittels DTA (Differentialthermoanalyse) ein Schmelzintervall von 151 - 166°C festgestellt und im Universal-rheometer der Fa. Paar-Physics mit Platte-Platte-Mess-System im Oszillationsmodus bei 140°C im Speichermodul (G')- / Verlustmodul (G")-Kreisfrequenzdiagramm kein Cross-Over-Point gefunden. Die Messung der Relaxationsenthalpie, nachdem der Film mit einer 3 Gew%-igen Emulsion aus GUERBET-Alkohol (Stenol®) in Wasser besprüht und 5 Sekunden ruhen gelassen wurde, ergab im Relaxationsenthalpie-Relaxationszeit-Diagramm ein Maximum der Relaxationsenthalpie bei 0,11 s.

Bei dem Material handelte es sich um ein Acetal, welches durch Säure-katalysierte Umsetzung von 60 Gewichtsteilen einer Mischung aus einem Teil des Polyvinylalkohols MOWIOL® 4-88 und 3 Teilen MOWIOL® 8-88 der Firma KSE Kuraray Specialities Europe GmbH (Frankfurt, D) mit 40 Gewichtsteilen nativer Kartoffelstärke hergestellt worden war, wobei die Kartoffelstärke mit 13 Gew-Teilen Glycerin und 4 Gewichtsteilen Wasser, beide bezogen auf 100 Gewichtsteile der vorgenannten Summe der Gewichte PVA und Stärke, weichgemacht war.

Diese Daten entsprachen einem Gesamt-Wassergehalt nach Karl-Fischer von 7,2 % bezogen auf Gesamt-PVACL.

Als Packungsgut 10 wurde ein Standard-Badeöl verwendet.

Das Heizsegment 9 war auf 170 °C aufgeheizt, wodurch die Filme vor dem Befüllen eine mittlere Temperatur von 135°C erreichten und durch das Befüllen mit dem zur Schonung des Packungsgutes nur auf 70°C erwärmten Packungsgut oberflächlich auf 125°C abkühlten (pyrometrische Fernmessung über IR). Das heißt, dass eine Siegelung unter diesen Bedingungen einem "Kaltsiegelprozess" gemäss der Erfindung entspricht. Unmittelbar vor dem Heizsegment 9 wurde auf beide Folien auf der der Gegenfolie zugewandten Seite eine Emulsion von 2% GUERBET-Alkohol in Wasser aufgesprüht. (Verweilzeit bis zum Kontakt und Siegelung ca. 3 s) .

Nach dem Zusammenpressen der beiden Filme am unteren Trommelende wurden sofort einwandfreie, dichte, blasenfrei befüllte Kapseln 12 erhalten.

Die Kapseln erwiesen sich auch nach mehreren Tagen Lagerzeit als stabil und löslich in kaltem (20°C) Wasser.

Im mod. Sturm-Test (OECD 301B) war das Kapselmaterial innerhalb von 28 Tagen zu mehr als 72% mineralisiert (TOC), wobei es nach der Expertise der EMPA (Eidgenössische Materialprüfanstalt) üblich ist, Stoffe als leicht biologisch abbaubar zu bezeichnen, wenn davon in diesem Test nach 28-tägigem Kontakt mit Belebtschlamm mindestens 60% des Kohlenstoffes in Kohlendioxid überführt worden sind.

### Vergleichsbeispiel 4:

Mit dem gleichen PVACL-Material wie in Beispiel 1 (Bestreichen mit Wasser als Lösungsmittel) wurde der Einkapselungsversuch aus Beispiel 1 wiederholt, allerdings unter Weglassen des Destrukturierungsmittels.

Es wurden wieder wie im Vergleichsbeispiel 3, unmittelbar nach dem Herausfallen der Kapseln unter den Formwalzen geschlossene Kapseln erhalten, diese wurden aber nach wenigen Stunden Lagerung undicht und zerfielen später bereits bei geringer mechanischer Belastung wieder in zwei Hälften. Eine mikroskopische Untersuchung der Siegelkanten zeigte, dass diese nie echt verschweißt waren, sondern nur verklebt und daher nur kurzzeitig reversibel verbunden, d.h. es wurden wieder nur sogenannte "weak-seals", das heißt Fehlstellen 3, wie in Fig. 1 gezeigt, erhalten.

### Beispiel 2:

Im Rotary-Dies-Verfahren gemäss Fig.3 wurde den beiden Formwalzen 6,7 direkt aus je einem Flachfolienextruder ein ca. 500 µm dicker PVACL-Film 11, 11' zugeführt. Bei dem Material handelte es sich wieder um ein Acetal aus 60 Gew-% MOWIOL® 8-88 der Firma KSE Kuraray Specialities Europe GmbH (Frankfurt, D) und 40 Gew-% nativer Kartoffelstärke, welche mit 13 Gew-Teilen Glycerin und 12 Gewichtsteilen Wasser, beide wieder bezogen auf 100 Gew.-Teile der Summe der Gewichte PVAL und Stärke, weichgemacht war. (Diese Daten entsprachen einem Gesamt-Wassergehalt nach Karl-Fischer von 15 %). In das PVACL-Material waren bereits bei der Strangextrusion zur Herstellung von PVACL-Granulat 5 Gew-% einwertiger GUERBET-Alkohol (Stenol®) eingeknetet. Die Verwendung dieses Granulats zur Folienextrusion unmittelbar gefolgt von Zuführung zu den Formwalzen im Rotary-Die-Prozess ohne weitere Befeuchtung ergab wieder einwandfreie, Langzeit-stabile Kapseln.

Ebenfalls stabile Kapseln wurden erhalten, wenn die Extrusionsfolien aus diesem Material vor Erreichen der Formwalzen im Rotary- Dies-Verfahren mit Wasserdampf (Sattdampf) von 120°C angeblasen wurden. Diese Kapseln waren nur etwas weicher als diejenigen, welche ohne Dampfanblasung hergestellt waren. Durch Ausbildung der Näpfchen 8 konnte gemäss dieser Ausführungsform der Erfindung eine "elefantenfußartige" Siegelnaht - siehe Fig. 3a - erzeugt werden.

Zusammenfassend kann gesagt werden, dass das erfindungsgemäße Verfahren im Gegensatz zu bekannten Verfahren keinen Heißsiegelprozess, sondern vielmehr ein Kaltsiegelprozess darstellt, bei welchem dennoch eine zufriedenstellende Siegelhaftung zwischen den Folienbahnen erzeugt wird. Dieser Effekt beruht darauf, dass die besonderen Eigenschaften der Folienausgangsmaterialien, nämlich der PVACL-Folien in Verbindung mit Destrukturierungsmitteln ausgenützt werden. Diese Destrukturierungsmittel bewirken, dass die Wasserstoffbrückenbindungen zwischen den Polymerketten zumindest teilweise aufgebrochen werden, sodass ohne zusätzliche Additive eine kohäsive Verbindung in einem Kaltsiegelprozess bereitgestellt wird.

Dies hat den Vorteil, dass auch wärmeempfindliches Packungsgut, wie Detergenzien oder pharmazeutische Präparate mit Temperatur--empfindlichen Wirkstoffen im Rahmen des erfindungsgemäßen Verfahrens, also dem Kaltsiegelungsverfahren abgepackt werden können, ohne dass zusätzliche Temperaturanwendung erforderlich ist. Dennoch ist - bedingt durch die echte Verschweißung im Siegelnahtbereich - eine zufriedenstellende Siegelnahtfestigkeit gegeben, sodass das empfindliche Packungsgut gegen Eindringen von Verunreinigungen oder Luftfeuchtigkeit geschützt ist und vor allem auch bei üblicher Beanspruchung durch sich ändernde Temperaturen während längerer Lagerung die Packung dicht bleibt.

### BEZUGSZEICHENLISTE

- 1: Pouch (Beutel) nach Stand der Technik
- 2: extrakapsuläre Siegelnaht
- 3: Fehlstelle (kapillarer Undichtigkeitsgrad)
- 4: Luftblase
- 5: Vorrichtung für Rotary-Dies-Verfahren
- 6,7: Formwalzen
- 8: Näpfchen
- 9: Zuführungssegment (Heizsegment)
- 10: Füllgut
- 11,11': Folie bzw. Gegenfolie
- 12: Kapsel
- 13: elefantenfussartige Siegelnaht

## Patentansprüche

1. Verfahren zur Herstellung von Verpackungsmaterialsystemen für technische und pharmazeutische Einzeldosierungen unter Verwendung von (1) durch Säure katalysierte Acetalisierungsreaktion von Polyvinylalkohol mit Stärke oder Stärkederivaten hergestellten Vinylalkoholcopolymeren (PVACL) in Verbindung mit (2) Destrukturierungsmitteln **dadurch gekennzeichnet, dass** kaltwasserlösliche, wasserhältige Vinylalkoholcopolymere (PVACL) bevor oder nachdem aus diesen Folien hergestellt werden mit Destrukturierungsmitteln versetzt werden, sodass die Wasserstoffbrücken zwischen den Polymerketten ganz oder zumindest teilweise aufgebrochen werden und dass anschließend die so vorbereiteten Folien aus Vinylalkoholcopolymeren auf Temperaturen unterhalb ihrer Schmelz- bzw. Erweichungsintervalle erwärmt und in einem Siegelprozess unter Anwendung von Druck für die Erzeugung einer Siegelnaht zu Verpackungen in Form von Einzeldosierungen weiterverarbeitet werden.

2. Verfahren nach Anspruch 1, **dadurch gekennzeichnet, dass** die Vinylalkoholcopolymere (PVACL) aus einer Gruppe ausgewählt sind, welche in ihrem Normalzustand im Speichermodul (G')-/Verlustmodul (G")-Kreisfrequenzdiagramm im Bereich zwischen 0,1 und 1000 s⁻¹ keinen Cross-over-Punkt (Eins-Punkt) zeigen, jedoch in Anwesenheit des Destrukturierungsmittels im Relaxationsenthalpie-Relaxionszeit-Diagramm ein Relaxationsenthalpie-Maximum bei Relaxationszeiten unter 2 s aufweisen.

3. Verfahren nach Anspruch 1 oder 2, **dadurch gekennzeichnet, dass** als Vinylalkoholcopolymere (PVACL) solche verwendet werden, die durch Säure-katalysierte Acetalisierung von 70 bis 35 Gew-Teilen PVA mit 30 bis 65 Gew.-Teilen Stärke oder Stärkederivaten hergestellt wurden.

4. Verfahren nach den Ansprüchen 1 oder 2, **dadurch gekennzeichnet, dass** als Vinylalkoholcopolymere (PVACL) solche verwendet werden, die durch Säure-katalysierte Acetalisierung von 65 bis 55 Gew-Teilen PVA mit 35 bis 45 Gew.-Teilen Stärke oder Stärkederivaten hergestellt wurden.

5. Verfahren nach einem der Ansprüche 1 bis 4, **dadurch gekennzeichnet, dass** die Vinylalkoholkomponenten der verwendeten Polyvinylalkoholcopolymere Gemische sind aus verschiedenen PVA-Typen, die ein mittleres Molekulargewicht (Gewichtsmittel) zwischen 25.000 und 130.000, vorzugsweise zwischen 30.000 und 70.000 aufweisen.

6. Verfahren nach Anspruch 5, **dadurch gekennzeichnet, dass** die Polyvinylalkoholkomponenten der eingesetzten Vinylalkoholcopolymere durch partielle Verseifung von Polyvinylacetat bis zu einem Verseifungsgrad zwischen 80 und 92 Mol-%, vorzugsweise zwischen 85 und 90 Mol-% herstellbar sind.

7. Verfahren nach einem der Ansprüche 1 bis 6, **dadurch gekennzeichnet, dass** die Stärkekomponente der eingesetzten Vinylalkoholcopolymere aus der Gruppe Mais-, Reis- oder Tapiokastärke ausgewählt ist.

8. Verfahren nach einem der Ansprüche 1 bis 7, **dadurch gekennzeichnet, dass** die in den eingesetzten Vinylalkoholcopolymeren verwendete Stärkekomponente durch oxidativen Abbau ein reduziertes mittleres Molekulargewicht (Gewichtsmittel) zwischen 50.000 und 500.000, vorzugsweise zwischen 150.000 und 300.000 aufweist.

9. Verfahren nach einem der Ansprüche 1 bis 7, **dadurch gekennzeichnet, dass** die in den eingesetzten Vinylalkoholcopolymeren verwendete Stärkekomponente durch oxidativen Abbau ein reduziertes mittleres Molekulargewicht (Gewichtsmittel) zwischen 50.000 und 500.000, vorzugsweise zwischen 150.000 und 300.000 aufweist und zusätzlich bis zu 15 Mol-% (bezogen auf die C₆-Einheiten) ethoxyliert oder propoxyliert ist.

10. Verfahren nach einem der Ansprüche 1 bis 9, **dadurch gekennzeichnet, dass** das eingesetzte Destrukturierungsmittel aus der Gruppe Montansäuren, Montansäureester, anionische und/oder nichtionische Tenside, oxidierte, vorzugsweise niedrigmolekulare Polyethylene, ein-oder mehrwertige verzweigte C₁₀ bis C₁₆-Alkohole, Ethoxylierungsprodukte von ein- oder mehrwertigen, verzweigten C₁₀ -C₁₆ -Alkoholen mit einem Ethoxylierungsgrad von 5 - 20 ausgewählt ist.

11. Verfahren nach einem der Ansprüche 1 bis 9, **dadurch gekennzeichnet, dass** das eingesetzte Destrukturierungsmittel aus der Gruppe der GUERBET-Alkohole ausgewählt ist.

12. Verfahren nach einem der Ansprüche 1 bis 11, **dadurch gekennzeichnet, dass** die Destrukturierungsmittel den Vinylalkoholcopolymeren vor der Folienherstellung zugemengt und anschließend diese Folien in einem Siegelverfahren, vorzugsweise in einem Rotary-Dies-Verfahren, weiterverarbeitet werden.

13. Verfahren nach einem der Ansprüche 1 bis 11, **dadurch gekennzeichnet, dass** die Destrukturierungsmittel den Vinylalkoholcopolymeren in Form von Lösungen, Emulsionen oder Suspensionen zugefügt, anschließend daraus Folien extrudiert und in einem Siegelverfahren, vorzugsweise in einem Rotary-Dies-Verfahren weiterverarbeitet werden.

14. Verfahren nach einem der Ansprüche 1 bis 11, **dadurch gekennzeichnet, dass** sowohl die Destrukturierungsmittel als auch die Vinylalkoholcopolymere aufgeschmolzen, diese Schmelze zu Folien weiterverarbeitet und anschließend in einem Siegelverfahren, vorzugsweise einem Rotary-Dies-Verfahren weiterverarbeitet werden.

15. Verfahren nach einem der Ansprüche 1 bis 11, **dadurch gekennzeichnet, dass** das Destrukturierungsmittel unmittelbar vor dem Siegelprozess auf die in Form von Filmen vorliegenden Vinylalkoholcopolymere aufgesprüht oder aufgestrichen wird und die so vorbehandelten Folie anschließend mit der jeweiligen Gegenfolie im Siegelprozess verbunden wird.

16. Verfahren nach einem der Ansprüche 1 bis 11, **dadurch gekennzeichnet, dass** das nach einem Verfahren nach einem der Ansprüche 12 bis 14 in die PVACL-Masse eingebrachte Destrukturierungsmittel unmittelbar vor dem Siegelprozess durch Anblasen der Filme mit Wasserdampf aktiviert wird und die so vorbehandelten Filme anschließend mit der jeweiligen Gegenfolie im Siegelprozess verbunden wird.

17. Verfahren nach einem der Ansprüche 1 bis 16, **dadurch gekennzeichnet, dass** die verwendeten Vinylalkoholcopolymere in einem Reaktionsextruder durch Säure katalysierte Acetalisierungsreaktion von Polyvinylalkohol sowie Mischungen daraus mit Stärke bzw. Stärkederivaten hergestellt wird.

18. Verwendung eines nach einem der Ansprüche 1 bis 17 hergestellten Verpackungsmaterialsystems zum Abpacken von technischen und/oder pharmazeutischen Stoffen in Form von Einzeldosierungen.
